(19) Europäisches Patentamt
European Patent Office
Office européen des brevets

(11) **EP 2 973 210 B1**

(12) **FASCICULE DE BREVET EUROPEEN**

(45) Date de publication et mention
de la délivrance du brevet:
**04.12.2019 Bulletin 2019/49**

(51) Int Cl.:
***G06K 9/00*** *(2006.01)*    ***H04L 9/32*** *(2006.01)*
***G06F 21/77*** *(2013.01)*

(21) Numéro de dépôt: **14708908.0**

(22) Date de dépôt: **11.03.2014**

(86) Numéro de dépôt international:
**PCT/EP2014/054696**

(87) Numéro de publication internationale:
**WO 2014/140008 (18.09.2014 Gazette 2014/38)**

(54) **PROCEDE DE TRAITEMENT SECURISE DE DONNEES ET APPLICATION A LA BIOMETRIE**

VERFAHREN ZUR SICHEREN DATENVERARBEITUNG UND VERWENDUNG IN DER BIOMETRIE

SECURE DATA PROCESSING METHOD, AND USE IN BIOMETRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2013 FR 1352153**

(43) Date de publication de la demande:
**20.01.2016 Bulletin 2016/03**

(73) Titulaire: **Idemia Identity & Security France 92400 Courbevoie (FR)**

(72) Inventeurs:
• **PATEY, Alain**
**F-92130 Issy les Moulineaux (FR)**
• **BRINGER, Julien**
**F-92130 Issy les Moulineaux (FR)**

(74) Mandataire: **Regimbeau**
**20, rue de Chazelles**
**75847 Paris Cedex 17 (FR)**

(56) Documents cités:
• NEYIRE DENIZ SARIER: "Practical multi-factor biometric remote authentication", BIOMETRICS: THEORY APPLICATIONS AND SYSTEMS (BTAS), 2010 FOURTH IEEE INTERNATIONAL CONFERENCE ON, IEEE, PISCATAWAY, NJ, USA, 27 septembre 2010 (2010-09-27), pages 1-6, XP031800565, ISBN: 978-1-4244-7581-0

• Neyire D. Sarier: "Biometric Cryptosystems: Authentication, Encryption and Signature for Biometric Identities", , 1 janvier 2011 (2011-01-01), pages 1-242, XP055102827, Extrait de l'Internet: URL:http://d-nb.info/1044870044/34 [extrait le 2014-02-18]

• LAGENDIJK R L ET AL: "Encrypted Signal Processing for Privacy Protection: Conveying the Utility of Homomorphic Encryption and Multiparty Computation", IEEE SIGNAL PROCESSING MAGAZINE, IEEE SERVICE CENTER, PISCATAWAY, NJ, US, vol. 30, no. 1, 1 janvier 2013 (2013-01-01), pages 82-105, XP011476459, ISSN: 1053-5888, DOI: 10.1109/MSP.2012.2219653

• ZEKERIYA ERKIN ET AL: "Privacy-Preserving Face Recognition", 5 août 2009 (2009-08-05), PRIVACY ENHANCING TECHNOLOGIES, SPRINGER BERLIN HEIDELBERG, BERLIN, HEIDELBERG, PAGE(S) 235 - 253, XP019124874, ISBN: 978-3-642-03167-0

• BENG JIN TEOH A ET AL: "Cancelable Biometrics Realization With Multispace Random Projections", IEEE TRANSACTIONS ON SYSTEMS, MAN AND CYBERNETICS. PART B:CYBERNETICS, IEEE SERVICE CENTER, PISCATAWAY, NJ, US, vol. 37, no. 5, 1 octobre 2007 (2007-10-01), pages 1096-1106, XP011192467, ISSN: 1083-4419, DOI: 10.1109/TSMCB.2007.903538

- JULIEN BRINGER ET AL: "Privacy-Preserving Biometric Identification Using Secure Multiparty Computation: An Overview and Recent Trends", IEEE SIGNAL PROCESSING MAGAZINE, IEEE SERVICE CENTER, PISCATAWAY, NJ, US, vol. 30, no. 2, 1 mars 2013 (2013-03-01), pages 42-52, XP011494320, ISSN: 1053-5888, DOI: 10.1109/MSP.2012.2230218
- AHMAD-REZA SADEGHI ET AL: "Efficient Privacy-Preserving Face Recognition", INTERNATIONAL ASSOCIATION FOR CRYPTOLOGIC RESEARCH,, vol. 20091021:181607, 21 octobre 2009 (2009-10-21), pages 1-21, XP061003890,
- MAURO BARNI ET AL: "Privacy-preserving fingercode authentication", PROCEEDINGS OF THE 12TH ACM WORKSHOP ON MULTIMEDIA AND SECURITY, MM&SEC '10, 1 janvier 2010 (2010-01-01), page 231, XP055103307, New York, New York, USA DOI: 10.1145/1854229.1854270 ISBN: 978-1-45-030286-9
- BUNDESMINISTERIUM DER JUSTIZ ED - BUNDESMINISTERIUM DER JUSTIZ: "Handbuch der Rechtsförmlichkeit,Teil B: Allgemeine Empfehlungen für das Formulieren von Rechtsvorschriften; 1: Sprachliche Gestaltung von Gesetzen und Rechtsverordnungen", HANDBUCH DER RECHTSFÖRMLICHKEIT, BUNDESANZEIGER VERLAG, PAGE(S) 1 - 38 , 1 janvier 2008 (2008-01-01), XP002686041, Extrait de l'Internet: URL:http://hdr.bmj.de/page_b.1.html [extrait le 2012-10-25]

**Description**

DOMAINE DE L'INVENTION

Les domaines de l'invention sont ceux de la reconnaissance biométrique et du traitement sécurisé de données détenues par des entités différentes, de sorte que les entités n'apprennent aucune information sur les données détenues par l'autre entité, le traitement comprenant le calcul d'une fonction entre deux données détenues par deux entités différentes.

L'invention est applicable notamment à l'identification et à l'authentification biométrique d'individus.

ETAT DE LA TECHNIQUE

Dans le domaine de l'identification (recherche d'une correspondance entre un individu et une pluralité d'individus de référence) ou de l'authentification (vérification d'une correspondance entre un individu et un individu candidat) biométrique d'individus, il est courant d'effectuer une comparaison d'une donnée biométrique d'un individu à une donnée biométrique de même nature, c'est-à-dire acquise à partir du même trait biométrique, d'un ou plusieurs autres individus.

Pour ce faire, on calcule une fonction des deux données biométriques que l'on souhaite comparer, qui exprime un taux de similarité entre les données. Il peut s'agir par exemple de la distance de Hamming, ou de la distance euclidienne, entre les données.

La distance euclidienne d entre deux vecteurs comprenant chacun m coordonnées $X = (X_1, ..., X_m)$ et $Y = (Y_1, ...,$

$Y_{m)}$ s'écrit comme suit : $d(X,Y) = \sqrt{\sum_{i=1}^{m}(X_i - Y_i)^2}$.

Le calcul d'une distance euclidienne entre deux données permet de déterminer un degré de similarité entre deux données biométriques d'individus, car plus la distance euclidienne entre les données est faible, plus les données comparées se ressemblent et la probabilité qu'elles appartiennent à un même individu est grande.

Les données biométriques qui peuvent utilisées pour le calcul d'une distance euclidienne peuvent être par exemple certains encodages numériques de visages ou d'empreintes digitales.

Dans ce type de traitement de données, il est particulièrement important de sécuriser les opérations effectuées sur les données biométriques, afin de préserver la confidentialité de ces données et de l'identité des individus comparer, et d'éviter que des données utilisées pour ces opérations puissent être apprises et exploitées par des tiers.

Cette sécurisation implique de sécuriser les calculs de comparaison de données biométriques, notamment pour qu'aucune des entités intervenant dans le calcul n'obtienne d'informations sur les données biométriques détenues par les autres entités.

Pour résoudre cette problématique, des procédés de traitement sécurisé de données biométriques pour la comparaison desdites données ont déjà été proposées. Par exemple, il a déjà été proposé des procédés de calcul sécurisé de distances euclidiennes, par ex. R.L. Lagendijk, "Encrypted Signal Processing for Privacy Protection: Conveying the Utility of Homomorphic Encryption and Multiparty Computation", IEEE Signal Processing Magazine, 30(1):82-105, 2013, mais ceux-ci présentent l'inconvénient de nécessiter l'emploi de techniques cryptographiques coûteuses en temps de calcul en bande passante.

PRESENTATION DE L'INVENTION

L'invention a pour but de pallier au problème énoncé ci-avant, en proposant un procédé de traitement sécurisé de données selon la revendication 1.

Le procédé de traitement proposé est sécurisé puisque le serveur n'obtient, après sa mise en oeuvre, aucune information sur l'index détenu par l'unité-client, et l'unité-client n'obtient aucune information sur les données détenues par le serveur.

Ce procédé est en outre adapté à l'utilisation d'un composant sécurisé intégré à un composant électronique, puisque le composant sécurisé, dont les capacités de calcul peuvent être limitées, n'effectue que des opérations simples, telles qu'additions et multiplications, qui sont donc peu coûteuses en temps de calcul.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- La figure 1 représente un exemple de mode de réalisation d'un système de traitement sécurisé de données.
- La figure 2 représente schématiquement les principales étapes d'un procédé de traitement de données proposé,
- La figure 3 représente un mode de mise en oeuvre particulière d'un procédé de traitement de la figure 2, dans un système de la figure 1.

DESCRIPTION DETAILLEE D'AU MOINS UN MODE DE MISE EN ŒUVRE DE L'INVENTION

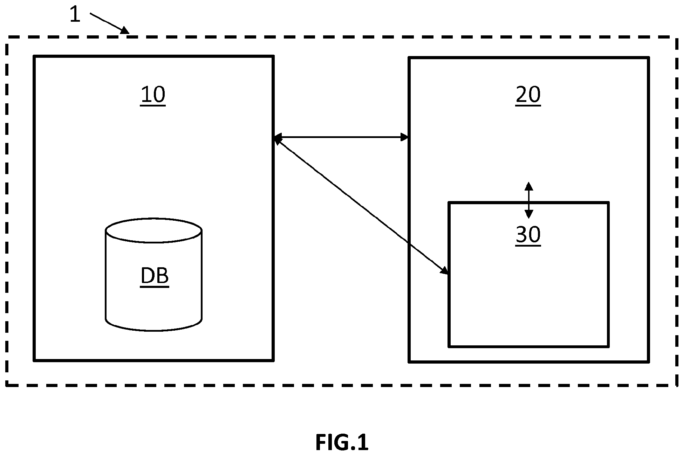

En référence à la figure 1, un système 1 configuré pour la mise en oeuvre d'un traitement de données comprenant le calcul sécurisé d'une fonction comprend une unité de traitement, ci-après nommée unité-serveur 10, comprenant par exemple une base de données DB, comprenant un nombre N de données $(x_1,...,x_N)$, N étant supérieur ou égal à 1. Chaque donnée $x_i$ comprend m coordonnées $xi_1,...,x_{i,m}$, m étant supérieur ou égal à 1.

Le système 1 comprend également une unité de traitement 20, cliente de l'unité-serveur, possédant une donnée y comprenant n coordonnées $y_i$, ainsi qu'un index $c \in \{1, ...n\}$ d'une donnée $x_c$ de la base à laquelle il souhaite comparer la donnée y.

La donnée y et les données $x_i$ de la base de données sont avantageusement des données biométriques acquises à partir de traits biométriques d'individus. Il peut s'agit par exemple de représentations numériques de visages d'individus, ou encore d'encodages d'empreintes digitales, telles que trouvées respectivement dans les publications suivantes :

- M. A. Turk et A. P. Pentland, « Eigenfaces for Récognition », Journal of Cognitive Neuroscience, 3(1) :71-86, 1991, et
- A. K. Jain, S. Prabhakar, L. Hong, S. Pankanti : « Fingercode : A Filterbank for Fingerprint Representation and Matching ». CVPR 1999:2187.

Dans tous les cas, les données y et $x_i$ sont des données biométriques acquises à partir du même type de trait biométrique (empreinte digitale ou visage, dans les exemples qui précèdent).

Le système 1 comprend enfin un composant sécurisé 30, qui est initialisé par l'unité-serveur comme décrit ci-après, avant d'être intégré à l'unité client 20. Le composant sécurisé est supposé inviolable. A titre d'exemple préférentiel, le composant sécurisé peut être une carte à puce, comme une carte SIM.

L'unité-client peut être un dispositif électronique personnel à un individu, par exemple à l'individu duquel provient la donnée y, c'est-à-dire détenu uniquement par celui-ci. Par exemple, dans le cas où le composant sécurisé 30 est une carte SIM, l'unité-client est avantageusement un téléphone portable.

Alternativement, l'unité-client peut être un dispositif électronique d'un tiers, comme par exemple d'un fournisseur de services à des individus, et dont notamment à l'individu duquel provient la donnée y.

Ce système peut notamment être un système d'authentification ou d'identification d'un individu, qui compare une donnée biométrique y d'un individu à une ou plusieurs données biométriques d'individus de référence pour établir une correspondance entre l'individu et l'un des individus de référence.

La comparaison entre deux données biométriques est alors réalisée en calculant la distance euclidienne entre la donnée de l'individu et l'une des données biométriques à laquelle elle est comparée.

La comparaison aboutit à une correspondance entre les individus desquels proviennent les données biométriques si une distance euclidienne obtenue est inférieure à un seuil prédéterminé $\varepsilon$.

Par exemple, pour authentifier l'individu, sa donnée y est comparée à une donnée $x_c$ détenue par l'unité-serveur par calcul de la distance euclidienne. Si cette distance euclidienne est inférieure au seuil $\varepsilon$, alors l'individu est considéré comme étant l'individu sur lequel la donnée $x_{io}$ a été acquise.

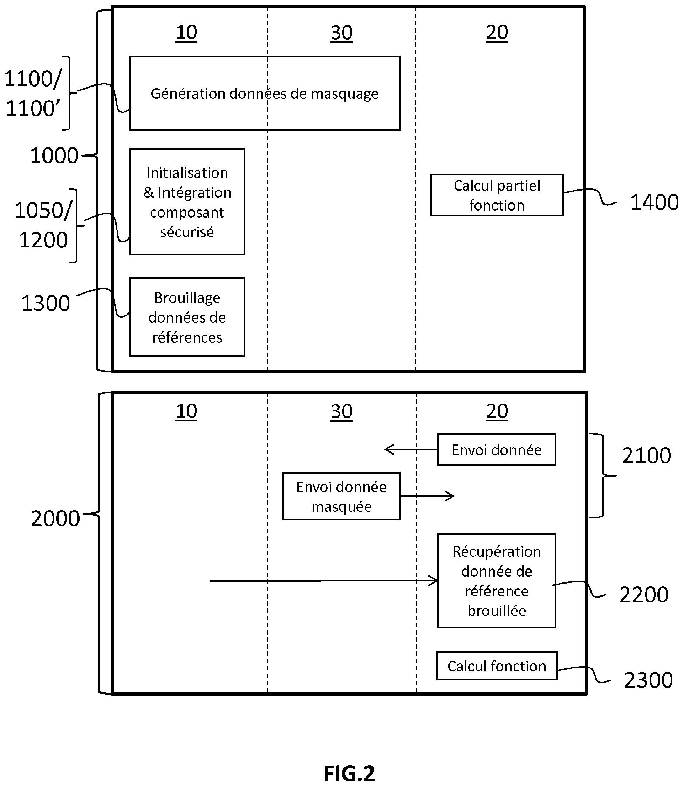

En référence à la figure 2, les principales étapes d'un procédé de traitement de données sont représentées. Ce traitement de données comprend le calcul d'une fonction f(X,Y) de deux variables X et Y, les variables comprenant respectivement m et n coordonnées, la fonction pouvant s'écrire sous la forme de la somme :

- d'un terme $f_1(X)$ dépendant uniquement de la première variable,
- d'un terme $f_2(Y)$ dépendant uniquement de la seconde variable, et
- d'un polynôme, tel que tous les monômes du polynôme comprennent au moins une coordonnée de chaque donnée.

Cette fonction s'écrit donc :

$$f(X,Y) = f_1(X_1, ..., X_m) + f_2(Y_1, ..., Y_n) + \sum_{|I|>0, |J|>0, |I|+|J| \leq t} e_{IJ} X_{(I)} Y_{(J)}$$

Où les $X_i$ et $Y_i$ sont respectivement les coordonnées des variables X et Y, et $I = (1, i_1), ..., (m, i_m)$, $j = (1, j_1), ..., (n, j_n)$,

$$X_{(I)} = X_1^{i_1} \times ... \times X_m^{i_m}, \quad Y_{(J)} = Y_1^{j_1} \times ... \times Y_n^{j_n}, \quad |I| = i_1 + ... + i_m \text{ et } |J| = j_1 + ... + j_n.$$

Avantageusement, la fonction f est une fonction polynômiale. Par exemple, il peut s'agir d'une fonction polynômiale de degré 2. Préférablement, la fonction f est la distance euclidienne carrée, telle que $f(X,Y) = \sum_{i=1}^{m}(X_i - Y_i)^2$. Dans ce cas les données de référence et la donnée Y comprennent le même nombre m de coordonnées.

Le procédé de traitement comprend une étape 1000 d'initialisation, qui comprend la génération de données de masquage 1100. Selon un premier mode de mise en oeuvre de cette étape, les données de masquage sont générées par l'unité-serveur 10.

Ces données comprennent un premier ensemble $r = \{r_{IJ}\}$ d'éléments $r_{IJ}$ choisis aléatoirement parmi l'ensemble des entiers modulo p $\mathbb{Z}_p$, , p étant un nombre premier, pour les I,J tels que $e_{ij} \neq 0$, et un deuxième ensemble $s = \{s_{IJ}\}$ pour les mêmes I, J.

Selon ce mode de mise en oeuvre, au cours d'une étape 1200, l'unité-serveur initialise un composant sécurisé 30 en chargeant des données de masquage dans ledit composant, et en intégrant le composant à une unité-client.

Les données de masquage chargées dans le composant sécurisé sont l'ensemble s, ainsi qu'un ensemble d'éléments indexés égaux aux inverses des éléments de r correspondants. Par exemple, en notant r* cet ensemble, $r^*_{IJ} = 1/r_{IJ}$.

Alternativement, le composant sécurisé 30 comporte un générateur de nombres pseudo-aléatoires. L'étape de génération de données de masquage 1100' est alors précédée d'une étape 1050, au cours de laquelle l'unité-serveur 10 charge dans le composant sécurisé une clé d'initialisation servant à générer les nombres pseudo-aléatoires. Lors de cette étape, l'unité-serveur peut également intégrer le composant sécurisé à l'unité client (correspondant à l'étape 1200 précédente).

L'étape de génération de données de masquage est alors mise en oeuvre à la fois par le composant sécurisé 30 et par l'unité-serveur 10, celui-ci disposant également de la clé d'initialisation. Les données de masquage générées par le composant sécurisé et par l'unité-serveur 10 sont les mêmes puisqu'elles sont obtenues à partir de la même clé d'initialisation. Il peut s'agir des ensembles s et r, et alors le composant sécurisé en déduit l'ensemble r*, ou à l'inverse il peut s'agir des ensembles s et r*, et alors l'unité-serveur en déduit l'ensemble r. Cette variante présente l'avantage qu'elle permet de générer plusieurs jeux de données de masquage par un même composant sécurisé, afin d'itérer plusieurs fois le procédé.

Avantageusement, quel que soit le mode de mise en oeuvre, plusieurs jeux de données de masquage s et r* sont ainsi générés et le cas échéant intégrés au composant sécurisé, afin de permettre à celui-ci d'exécuter plusieurs fois le procédé.

Dans le cas où le composant sécurisé comporte un générateur de nombres pseudo-aléatoires, les différents jeux de données de masquage peuvent n'être générés qu'à partir d'une seule clé de génération.

A partir des données de masquage, l'unité-serveur brouille, au cours d'une étape 1300, l'ensemble des données de référence de la base, en calculant, pour chaque donnée de référence $x^l$, une donnée $\widetilde{x^l} = \{x_{(I)}^l r_{IJ}\}_{I,J}$ et un coefficient :

$$\alpha_l = \sum_{I,J} e_{IJ} x_{(I)}^l r_{IJ} s_{IJ} - f_1(x^l)$$

Au cours d'une étape 1400, l'unité-client calcule, à partir de la donnée y dont elle dispose, le terme $f_2(y)$ de la fonction à calculer. Le calcul de ce terme est possible puisque, comme indiqué ci-avant, il ne dépend que de la donnée y.

Le procédé comprend ensuite une étape 2000 d'exécution du calcul de la fonction f. Avantageusement, si le procédé de traitement de données est mis en oeuvre plusieurs fois, en calculant à chaque fois la fonction f entre la donnée y et une donnée de la base, l'étape 1000 d'initialisation ci-avant n'est réalisée qu'une seule fois pour toutes les comparaisons effectuées.

En revanche, l'étape d'exécution 2000 décrite ci-après est réalisée pour chaque comparaison Au cours d'une première étape 2100, l'unité-client envoie au composant sécurisé l'ensemble des coordonnées de la donnée y. A partir des coordonnées et des données de masquage qu'il détient, le composant sécurisé renvoie la donnée Y masquée à l'unité-client sous la forme d'une donnée T dont les coordonnées sont :

$$\left\{ t_{IJ} = \frac{y_{(J)}}{r_{IJ}} + s_{IJ} \right\}_{I,J}$$

On observe que le procédé est adapté à l'utilisation d'un composant sécurisé intégré à une unité-client, ce composant étant supposé avoir une faible capacité de calcul. En effet, le composant sécurisé 30 ne réalise que des opérations simples, c'est-à-dire des additions et des multiplications.

Au cours d'une étape 2200, l'unité-client récupère de l'unité-serveur la donnée de référence $x_c$ indexée par c, sous forme brouillée, c'est-à-dire récupère :

$$\left( \widetilde{x_1^c} \, \| \, \alpha_1, \dots, \widetilde{x_m^c} \, \| \, \alpha_m \right).$$

Avantageusement, cette étape est mise en oeuvre par transfert inconscient (également connue sous le nom anglais de « oblivious transfer »).

Un transfert inconscient est une opération de calcul entre deux parties P1 et P2. Dans ce type d'opération, P1 dispose d'une liste de N éléments indexés $X_i$, et P2 connaît le nombre N d'éléments de la liste et choisit un indice i entre 0 et N-1. Par transfert inconscient, P2 récupère le i$^{ème}$ élément de P1, c'est-à-dire l'élément de P1 indexé par i.

P1 n'apprend aucune information sur l'indice de l'élément récupéré par P2.

P2 ne récupère quant à lui aucune information sur les autres éléments de la liste détenus par P1.

Dans le cas présent, l'unité-client dispose d'un index c d'une donnée détenue par l'unité-serveur, et récupère, par transfert inconscient de type $OT_N^1$ (c'est-à-dire qu'il récupère une donnée parmi N données détenues par l'unité client), les données $\tilde{x}_c$ et $\alpha_c$ indexées par l'index c.

A l'issue de cette étape, l'unité-client a donc récupéré les données $\tilde{x}_c$ et $\alpha_c$ sans apprendre d'informations sur les autres données détenues par l'unité-serveur, et l'unité-serveur n'a rien appris. Notamment, elle n'a appris aucune information sur la donnée y détenue par l'unité-client ou sur l'index c dont elle dispose.

On constate que le transfert inconscient est le seul échange entre l'unité-client et l'unité-serveur. Ceci permet de garantir la confidentialité des données des deux unités.

Enfin, à partir des données acquises au cours des étapes 2100 et 2200, l'unité-client met en oeuvre, au cours d'une étape 2300, le calcul de la fonction f($x_c$,y), entre la donnée de référence indexée par c et la donnée y détenue par l'unité-client.

Pour ce faire, elle calcule, à partir desdites données, la somme du terme de la fonction ne dépendant que de la variable $x_c$ et du polynôme, cette somme étant obtenue par la mise en oeuvre du calcul suivant :

$$\sum_{I,J} e_{IJ} \widetilde{x_{(IJ)}^c} t_{IJ} - \alpha_c$$

Enfin, l'unité-client détermine le résultat de la fonction f en sommant au terme précédent le terme $f_2(y)$ ne dépendant que de la variable y et calculé lors de l'étape 1400.

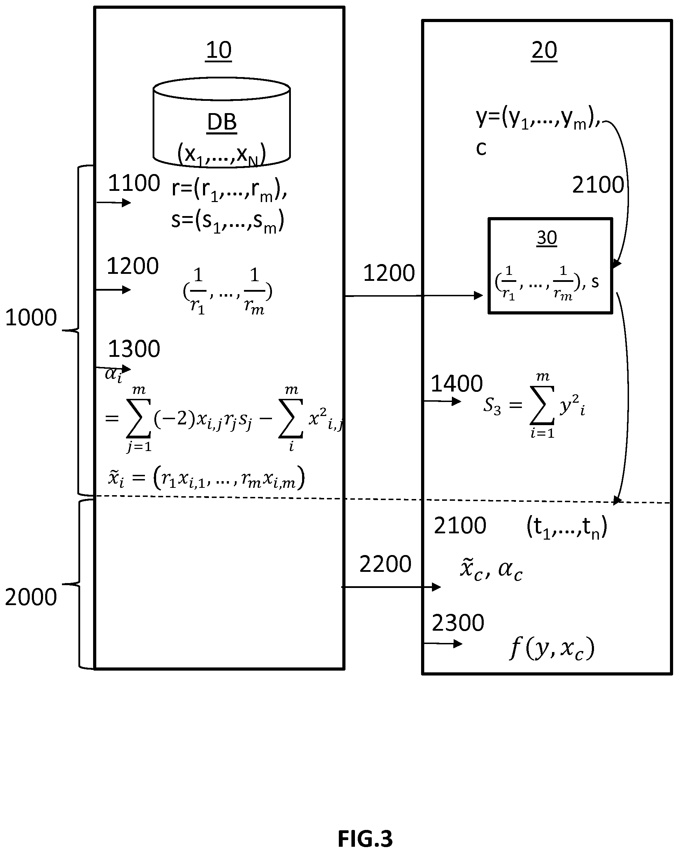

On va maintenant décrire, en référence à la figure 3, le cas particulier de la mise en oeuvre du procédé de traitement de la figure 2, appliqué à un cas comprenant le calcul de la distance euclidienne entre la donnée y détenue par l'unité-client et l'une des données de référence.

La distance euclidienne s'écrit :

$$f(X, Y) = \left( \sum_{i=1}^{m} (X_i - Y_i)^2 \right)^{1/2}$$

$$= \left( \sum_{i=1}^{m} X_i{}^2 + \sum_{i=1}^{m} Y_i{}^2 - 2 \sum_{1 \le i \le m} X_i Y_i \right)^{1/2}$$

On constate donc que l'on peut calculer le carré de la distance euclidienne en mettant en oeuvre le procédé décrit ci-avant, ce carré comprenant :

- un terme $f_1(X)$ ne dépendant que de la donnée X, $f_1(X) = \sum_{i=1}^{m} X_i^2$,

- un terme $f_2(Y)$ ne dépendant que de la variable Y, $f_2(Y) = \sum_{i=1}^{m} Y_i^2$, et

- un polynôme ayant pour variables les données X et Y, tel que tous les monômes du polynôme comprennent au moins une coordonnée de chaque donnée : $f_3(X,Y) = -2\sum_{i=1}^{m} X_i Y_i$.

Il suffit donc, à la fin du procédé de traitement, de calculer la racine carrée de la somme des trois termes pour obtenir la distance euclidienne.

Selon le premier mode de mise en oeuvre décrit ci-avant, au cours de l'étape d'initialisation 1000, l'étape 1100 de génération des données de masquage comprend la génération, pour chaque donnée $x^l$ de référence, de deux données $r = (r_1,...,r_m) \in (\mathbb{Z}_p)^m$ et $s = (s_1,...,s_m) \in (\mathbb{Z}_p)^m$, comprenant chacune m coordonnées appartenant à l'ensemble des entiers modulaires. L'étape 1200 d'initialisation du composant sécurisé par l'unité-serveur comprend l'insertion, par l'unité-serveur, dans le composant sécurisé, d'une clé $(\frac{1}{r_1}, ..., \frac{1}{r_m})$ dont les coordonnées sont les inverses des coordonnées de la donnée r, ainsi que de la donnée s. L'unité-serveur intègre ensuite le composant sécurisé 30 à l'unité-client 20.

Selon le deuxième mode de mise en oeuvre, l'unité-serveur initialise le composant sécurisé au cours d'une étape 1050 en chargeant une clé d'initialisation du générateur de nombres pseudo-aléatoires et insère le composant dans l'unité-client.

Puis l'étape 1100' comprend la génération des données s et r ou r*, et la déduction respectivement par le composant sécurisé de r* ou par l'unité-serveur de r.

A partir des données de masquage obtenues à l'étape 1100, l'unité-serveur brouille, au cours de l'étape 1300, l'ensemble des données de référence de la base, en calculant, pour chaque donnée de référence $x^l$, une donnée $\widetilde{x^l} = \{x_1^l r_1, ..., x_m^l r_m\}$ et un coefficient :

$$\alpha_i = \sum_{j=1}^{m}(-2)x_{i,j}r_j s_j - \sum_{i=1}^{m}(x^2_{i,j})$$

L'unité-serveur obtient donc un ensemble de N données $(\alpha_1, ... \alpha_N)$ et N données $(\widetilde{x^1}, ... \widetilde{x^N})$.

L'initialisation comprend enfin, du côté de l'unité client, le calcul 1400 de la somme quadratique des coordonnées de la donnée y, $f_2(y) = \sum_{i=1}^{m} y^2_i$, correspondant au terme du carré de la distance euclidienne dépendant uniquement de la donnée y.

Puis, au cours de l'étape d'exécution du calcul, l'étape 2100 comprend la communication, par l'unité-client, à l'élément sécurisé de l'ensemble des coordonnées $y_i$ de sa donnée y. A partir de ces données, l'élément sécurisé calcule, pour l'ensemble des coordonnées $y_i$, une valeur $t_i = \frac{y_i}{r_i} + s_i$ et la renvoie à l'unité client.

L'unité-client met ensuite en oeuvre, au cours de l'étape 2200 un transfert inconscient avec l'unité-serveur pour récupérer les données $\tilde{x}_c$ et $\alpha_c$.

L'unité-client peut donc, à partir des données obtenues, calculer au cours de l'étape 2300 la distance euclidienne carrée $f(y,x_c)$ entre sa donnée y et la donnée $x_c$ de la base. Tout d'abord, elle calcule la somme

$$\left(\sum_{i=1}^{...}(-2)\tilde{x}_i^c t_i\right) - \alpha_c$$

$$= \sum_{i=1}^{...}(-2)r_i x_i^c \left(\frac{y_i}{r_i} + s_i\right) - \sum_{i=1}^{...}(-2)x_i^c r_i s_i + \sum_{i=1}^{...}(x_i^c)^2$$

$$= \sum_{i=1}^{...}(-2)x_i^c y_i + \sum_{i=1}^{...}(x_i^c)^2$$

En sommant ces termes avec $f_2(y)$ on obtient :

$$\sum_{i=1}^{...}(-2)x_i^c y_i + \sum_{i=1}^{...}(x_i^c)^2 + \sum_{i=1}^{...}(y_i)^2 = \sum_{i=1}^{...}(x_i^c - y_i)^2$$

En déterminant la racine carrée de la somme obtenue, l'unité-client obtient donc la distance euclidienne entre y et la donnée $x_c$.

Comme indiqué ci-avant, ce procédé est applicable à la biométrie et l'on peut notamment l'utiliser pour l'identification ou l'authentification d'un individu. Dans ce cas, le procédé comprend en outre une étape de comparaison de chaque distance euclidienne calculée entre la donnée y de l'individu et une des données de l'unité-serveur à un seul prédéterminé $\varepsilon$. Si, pour une donnée de la base la distance euclidienne calculée est inférieure audit seuil, ou, dans le cas où plusieurs données vérifient cette propriété, pour la donnée dont la distance euclidienne est minimale, l'individu est reconnu comme étant l'individu duquel a été obtenue la donnée de la base correspondante.

Le procédé proposé permet donc à une unité d'obtenir une distance euclidienne entre sa donnée et une donnée confidentielle stockée à distance, sans rien apprendre sur les données de l'unité-serveur.

En l'espèce, ceci permet de garantir la confidentialité des données biométriques des différents individus.

## Revendications

1. Procédé de traitement sécurisé de données, mis en oeuvre par un système (1) comprenant une unité-serveur (10) détenant N données de référence $(x_1,...,x_N)$, une unité-client (20) possédant une donnée à comparer (y), et l'index c d'une donnée de la base, et un composant électronique sécurisé (30), le procédé comprenant le calcul d'une fonction (f) entre la donnée à comparer et au moins une donnée de référence $(x_c)$ indexée par l'index c, la fonction étant du type pouvant s'écrire sous la forme d'une somme :

   - d'un terme $(f_1)$ dépendant uniquement de la donnée à comparer,
   - d'un terme $(f_2)$ dépendant uniquement de la donnée de référence, et
   - d'un polynôme dont les variables sont les coordonnées de la donnée à comparer (y) et de la donnée de référence $(x_c)$ indexée par l'index c, tel que tous les monômes du polynôme comprennent au moins une coordonnée de chaque donnée,

   le procédé comprenant une étape d'initialisation (1000), laquelle comprend:

   - la génération (1100) de données de masquage par l'unité-serveur (10), ou conjointement par l'unité-serveur (10) et le composant électronique sécurisé (30), de sorte que des données de masquage soient détenues par l'unité-serveur (10) et des données de masquage soient détenues par le composant sécurisé (30),
   - l'intégration (1200) du composant électronique sécurisé (30) à l'unité-client (20),
   - le brouillage (1300) des données de référence $(x_1,...,x_N)$ par l'unité-serveur à partir desdites données de masquage, et
   - le calcul (1400), par l'unité-client (20), du terme $(f_2)$ de la fonction dépendant uniquement de la donnée (y) à comparer,

   et le procédé comprenant en outre des étapes d'exécution (2000) du calcul de la fonction entre la donnée (y) à comparer de l'unité-client (20) et la donnée de référence $(x_c)$ indexée par l'index c, au cours desquelles :

**EP 2 973 210 B1**

- l'unité-client (20) envoie (2100) les coordonnées de la donnée à comparer (y) au composant sécurisé, qui la lui retourne masquée à partir des données de masquage qu'il détient,
- l'unité-client récupère (2200), auprès de l'unité-serveur, la donnée de référence indexée par l'index c brouillée par les données de masquage, et
- à partir des données obtenues du composant électronique sécurisé et de l'unité-serveur, l'unité-client calcule (2300) la somme du terme de la fonction dépendant uniquement de la donnée de référence et du terme polynomial, et ajoute à ladite somme le terme dépendant uniquement de la donnée à comparer pour obtenir le résultat de la fonction.

2. Procédé selon la revendication précédente, dans lequel la fonction est une fonction polynômiale des coordonnées de la donnée (y) à comparer et de la donnée de référence ($x_c$) indexée par l'index c.

3. Procédé selon l'une des revendications 1 ou 2, dans lequel la fonction est la distance euclidienne carrée entre la donnée à comparer (y) et la donnée de référence ($x_c$) indexée par c.

4. Procédé selon l'une des revendications précédentes, dans lequel les données de masquages sont générées aléatoirement, par le composant électronique sécurisé (30) et/ou l'unité-serveur (10), les données de masquage intégrées au composant électronique sécurisé comprenant un premier ensemble s et un second ensemble r, et les données de masquage détenues par l'unité serveur comprenant le premier ensemble s, et un troisième ensemble dont les éléments sont les inverses des éléments de l'ensemble r.

5. Procédé selon l'une des revendications précédentes, dans lequel l'étape de récupération (2200), par l'unité-client (20), de la donnée de référence indexée par c brouillée à partir des données de masquage est mise en oeuvre par transfert inconscient.

6. Procédé d'initialisation d'un composant sécurisé, lors d'un procédé de traitement selon l'une des revendications précédentes, comprenant :

- la génération aléatoire de données r et s, telle que l'unité-serveur (10) détient lesdites données et le composant sécurisé (30) détient l'ensemble s, et un ensemble dont les éléments sont les inverses des éléments de l'ensemble r, et
- l'intégration dudit composant à une unité de traitement formant une unité-client de l'unité-serveur.

7. Procédé de traitement de données mis en oeuvre par une unité de traitement détenant un entier c et une donnée (y), et comprenant un composant électronique sécurisé intégré (30), pour l'exécution du procédé de traitement selon l'une des revendications 1 à 5 comprenant le calcul d'une fonction entre la donnée (y) et au moins une donnée de référence ($x_c$) indexée par l'index c et détenue par une unité-serveur, au cours duquel l'unité de traitement :

- calcule (1400) le terme de la fonction ne dépendant que de la donnée (y),
- obtient (2200), par transfert inconscient avec une unité-serveur, une donnée de référence détenue par l'unité-serveur et indexée par l'entier c, et brouillée par des données de masquage,
- envoie (2100) au composant électronique sécurisé les coordonnées de la donnée (y) qu'elle détient, et reçoit en réponse ladite donnée masquée, et
- calcule la somme du terme de la fonction dépendant uniquement de la donnée de référence et du terme polynomial, à partir des données obtenues du composant électronique sécurisé et de l'unité-serveur, et ajoute à ladite somme le terme dépendant uniquement de la donnée à comparer pour obtenir le résultat de la fonction.

8. Unité de traitement (20), comprenant des moyens de traitement configurés pour la mise en oeuvre du procédé selon la revendication précédente.

9. Produit programme d'ordinateur comprenant des instructions de code pour la mise en oeuvre du procédé selon la revendication 7 lorsque celui-ci est mis en oeuvre par des moyens de traitement d'une unité de traitement.

10. Procédé de traitement de données mis en oeuvre par une unité de traitement (10) détenant N données de référence ($x_1,...,x_N$), pour l'exécution du procédé de traitement selon l'une des revendications 1 à 5, au cours duquel l'unité de traitement :

- génère des données de masquage (1100) et insère lesdites données au composant électronique sécurisé,

9

ou charge sur le composant une clé d'initialisation permettant la génération par le composant sécurisé de nombres pseudo-aléatoire (1050), et
- brouille (1300) les données de référence à partir desdites données de masquage.

**11.** Unité de traitement (10), comprenant des moyens de traitement configurés pour la mise en oeuvre du procédé selon la revendication précédente.

**12.** Produit programme d'ordinateur comprenant des instructions de code pour la mise en oeuvre du procédé selon la revendication 10 lorsque celui-ci est mis en oeuvre par des moyens de traitement d'une unité de traitement.

**13.** Procédé d'authentification ou d'identification d'un individu, comprenant la comparaison d'une donnée biométrique (y) acquise sur un individu à une ou plusieurs données biométriques de référence ($x_1,...,x_N$) acquises sur des individus répertoriés, dans lequel chaque comparaison entre la donnée de l'individu et une donnée de référence est réalisée par la mise en oeuvre du procédé de traitement sécurisé de données selon l'une des revendications 1 à 5 entre la donnée de l'individu et la donnée de référence.

**14.** Système d'authentification ou d'identification d'un individu, comprenant une unité-serveur (10) comprenant une base de données (DB) biométriques de référence d'individus répertoriés ($x_1,...,x_N$), et une unité-client (20), ladite unité-client comprenant un composant électronique sécurisé intégré (30),
le système étant **caractérisé en ce qu'**il est adapté pour mettre en oeuvre le procédé selon la revendication précédente.

**15.** Système d'authentification ou d'identification selon la revendication précédente, dans lequel l'unité-client est un dispositif électronique personnel à l'individu à identifier ou authentifier, et le composant électronique sécurisé (30) est une carte à puce.


**Patentansprüche**

**1.** Gesichertes Datenübertragungsverfahren, das von einem System (1) umgesetzt wird, umfassend eine Servereinheit (10), die N Referenzdaten ($x_1$, ..., $x_N$) enthält, wobei eine Client-Einheit (20) ein zu vergleichendes Datenelement (y), und den Index c einer Datenbank der Basis und ein gesichertes elektronisches Bauteil (30) besitzt,
wobei das Verfahren die Berechnung einer Funktion (f) zwischen dem zu vergleichenden Datenelement und wenigstens einem Referenz-Datenelement ($x_c$), das von dem Index x indexiert ist, wobei die Funktion von dem Typ ist, der in Form einer Summe ausgedrückt werden kann:

- eines Elements ($f_1$), das ausschließlich von dem zu vergleichenden Datenelement abhängt,
- eines Elements ($f_2$), das ausschließlich von dem Referenz-Datenelement abhängt, und
- eines Polynoms, dessen Variable die Koordinaten des zu vergleichenden Datenelements (y) und des Referenz-Datenelements ($x_c$) sind, das von dem Index c indexiert wird, wie z. B. alle Monomere des Polynoms, die wenigstens eine Koordinate jedes Datenelements umfassen,

wobei das Verfahren einen Initialisierungsschritt (1000) umfasst, der umfasst:

- das Erzeugen (1100) von Maskierungsdaten durch die Servereinheit (10) oder gemeinsam durch die Servereinheit (10) und das gesicherte elektronische Bauteil (30) derart, dass die Maskierungsdaten von der Servereinheit (10) enthalten werden und die Maskierungsdaten von dem gesicherten Bauteil (30) enthalten werden,
- Integration (1200) des gesicherten elektronischen Bauteils (30) in die Client-Einheit (20),
- Verdecken (1300) der Referenzdaten ($x_1$, ..., $x_N$) durch die Servereinheit ausgehend von den genannten Maskierungsdaten, und
- Berechnung (1400) des Elements ($f_2$) der Funktion, die ausschließlich von dem zu vergleichenden Datenelement (y) abhängt, durch die Client-Einheit (20),

und wobei das Verfahren weiterhin Ausführungsschritte (2000) der Berechnung der Funktion zwischen dem zu vergleichenden Datenelement (y) der Client-Einheit (20) und dem Referenz-Datenelement ($x_c$), das vom Index c indexiert wird, umfasst, in deren Verlauf:

- die Client-Einheit (20) die Koordinaten des zu vergleichenden Datenelements (y) an das gesicherte Bauteil sendet (2100), das es ihr maskiert ausgehend von den Maskierungsdaten zurücksendet, die es vorhält,
- die Client-Einheit das Referenz-Datenelement, das vom Index c indexiert wird und von den Maskierungsdaten verdeckt wird, bei der Servereinheit zurückerhält (2200) und
- ausgehend von den erhaltenen Daten des gesicherten elektronischen Bauteils und der Servereinheit, die Client-Einheit die Summe des Elements der Funktion berechnet (2300), die ausschließlich von dem Referenzdatenelement und dem Polynomelement abhängt, und zu der genannten Summe das Element hinzufügt, das ausschließlich von dem zu vergleichenden Datenelement abhängt, um das Ergebnis der Funktion zu erhalten.

2. Verfahren gemäß dem voranstehenden Anspruch, bei dem die Funktion eine Polynomfunktion der Koordinaten des zu vergleichenden Datenelements (y) und des Referenz-Datenelements ($x_c$) ist, das von dem Index x indexiert wird.

3. Verfahren gemäß einem der Ansprüche 1 oder 2, bei dem die Funktion die euklidische Quadratdistanz zwischen dem zu vergleichenden Datenelement (y) und dem Referenz-Datenelement ($x_c$) ist, das von c indexiert wird.

4. Verfahren gemäß einem der voranstehenden Ansprüche, bei dem die Maskierungsdaten von dem gesicherten elektronischen Bauteil (30) und / oder der Servereinheit (10) zufällig erzeugt werden, wobei die in das gesicherte elektronische Bauteil integrierten Maskierungsdaten eine erste Gruppe s und eine zweite Gruppe r umfassen, und die von der Servereinheit gehaltenen Maskierungsdaten die erste Gruppe s und eine dritte Gruppe, deren Elemente die Umkehrungen der Elemente der Gruppe r sind, umfassen.

5. Verfahren gemäß einem der voranstehenden Ansprüche, bei dem der Rückgewinnungsschritt (2200) des Referenz-Datenelements, das von c indexiert wird, das ausgehend von den Maskierungsdaten verdeckt wird, durch die Client-Einheit (20) per unbewusster Übertragung umgesetzt wird.

6. Initialisierungsverfahren eines gesicherten Bauteils bei einem Verarbeitungsverfahren gemäß einem der voranstehenden Ansprüche, umfassend:

    - das zufällige Erzeugen von Daten r und s derart, dass die Servereinheit (10) die genannten Daten hält und das gesicherte Bauteil (30) die Gruppe s und eine Gruppe, deren Elemente die Umkehrungen der Elemente der Gruppe r sind, hält und
    - die Integration des genannten Bauteils in eine Verarbeitungseinheit, die eine Client-Einheit der Servereinheit bildet.

7. Datenverarbeitungsverfahren, das von einer Verarbeitungseinheit hält, die ein ganzes c und ein Datenelement (y) umgesetzt wird, und umfassend ein integriertes gesichertes elektronisches Bauteil (30) für die Ausführung des Verarbeitungsprozesses gemäß einem der Ansprüche 1 bis 5, umfassend die Berechnung einer Funktion zwischen dem Datenelement (y) und wenigstens einem Referenz-Datenelement ($x_c$), das vom Index c indexiert wird und von einer Servereinheit gehalten wird, in dessen Verlauf die Verarbeitungseinheit:

    - den Ausdruck der Funktion berechnet (1400), die nur von dem Datenelement (y) abhängt,
    - per unbewusster Übertragung mit einer Servereinheit ein Referenz-Datenelement erhält (2200), das von der Servereinheit gehalten und von dem ganzen c indexiert wird, und von den Maskierungsdaten verdeckt wird,
    - an das gesicherte elektronische Bauteil die Koordinaten des Datenelements (y) sendet (2100), die es hält, und als Antwort das genannte maskierte Datenelement empfängt und
    - die Summe des Ausdrucks der Funktion, die ausschließlich von dem Referenz-Datenelement und dem Polynomelement abhängt, ausgehend von den Daten berechnet, die von dem gesicherten elektronischen Bauteil und der Servereinheit erhalten werden und zu der genannten Summe den Ausdruck hinzufügt, der ausschließlich von dem zu vergleichenden Datenelement abhängt, um das Ergebnis der Funktion zu erhalten.

8. Verarbeitungseinheit (20), umfassend Verarbeitungsmittel, die zum Umsetzen des Verfahrens gemäß dem voranstehenden Anspruch gestaltet sind.

9. Computerprogramm-Produkt, umfassend Codeanweisungen für die Umsetzung des Verfahrens gemäß Anspruch 7, wenn dieses durch Verarbeitungsmittel einer Verarbeitungseinheit umgesetzt wird.

10. Datenverarbeitungsverfahren, das von einer Verarbeitungseinheit (10) umgesetzt wird, die N Referenzdaten ($x_1$, ... $x_N$) hält, zum Ausführen des Verarbeitungsverfahrens gemäß einem der Ansprüche 1 bis 5, in dessen Verlauf die Verarbeitungseinheit:

- Maskierungsdaten (1100) erzeugt und die genannten Daten in das gesicherte elektronische Bauteil einfügt oder auf dem Bauteil einen Initialisierungsschlüssel lädt, der das Erzeugen von pseudo-zufälligen Zahlen (1050) durch das gesicherte Bauteil zulässt und

- die Referenzdaten ausgehend von den genannten Maskierungsdaten verdeckt (1300).

11. Verarbeitungseinheit (10), umfassend Verarbeitungsmittel, die zum Umsetzen des Verfahrens gemäß dem voranstehenden Anspruch gestaltet sind.

12. Computerprogramm-Produkt, umfassend Codeanweisungen für die Umsetzung des Verfahrens gemäß Anspruch 10, wenn dieses von Verarbeitungsmitteln einer Verarbeitungseinheit umgesetzt wird.

13. Authentifizierungs- oder Identifizierungsverfahren einer Person, umfassend den Vergleich eines biometrischen Datenelements (y), das von einer Person erhalten wurde, mit einem oder mehreren biometrischen Referenz-Datenelement(en) ($x_1$, ..., $x_N$), die von verzeichneten Personen erhalten wurde(n), bei dem jeder Vergleich zwischen dem Datenelement der Person und einem Referenz-Datenelement durch das Umsetzen des gesicherten Verarbeitungsverfahrens von Daten gemäß einem der Ansprüche 1 bis 5 zwischen dem Datenelement der Person und dem Referenz-Datenelement durchgeführt wird.

14. Authentifizierungs- oder Identifizierungssystem einer Person, umfassend eine Servereinheit (10), umfassend eine biometrische Referenz-Datenbank (DB) von verzeichneten Personen ($x_1$, ..., $x_N$) und eine Client-Einheit (20), wobei die genannte Client-Einheit ein integriertes, gesichertes, elektronisches Bauteil (30) umfasst,
wobei das System **dadurch gekennzeichnet ist, dass** es geeignet ist, um das Verfahren gemäß dem voranstehenden Anspruch umzusetzen.

15. Authentifizierungs- oder Identifizierungssystem gemäß dem voranstehenden Anspruch, bei dem die Client-Einheit eine persönliche elektronische Vorrichtung für die zu identifizierende oder authentifizierende Person ist und das gesicherte elektronische Bauteil (30) eine Chipkarte ist.

**Claims**

1. Secure data processing method, implemented by a system (1) comprising a server unit (10) holding N reference data ($X_1$,...,$X_N$) , a client unit (20) having a datum to be compared (y), and the index c of a datum of the base, and a secure electronic component (30),
the method comprising the calculation of a function (f) between the datum to be compared and at least one reference datum ($x_c$) indexed by the index c, the function being of the type able to be written in the form of a sum:

- of a term ($f_1$) that depends solely on the datum to be compared,
- of a term ($f_2$) that depends solely on the reference datum, and
- of a polynomial of which the variables are the coordinates of the datum to be compared (y) and of the reference datum ($x_c$) indexed by the index c, such that all the monomials of the polynomial include at least one coordinate of each datum,

the method comprising a step of initialisation (1000), which comprises:

- generating (1100) masking data by the server unit (10), or jointly by the server unit (10) and the secure electronic component (30), in such a way that masking data is held by the server unit (10) and masking data is held by the secure component (30),
- integrating (1200) the secure electronic component (30) into the client unit (20),
- scrambling (1300) reference data ($X_1$,...,$X_N$) by the server unit on the basis of masking data, and
- calculating (1400), by the client unit (20), the term ($f_2$) of the function that depends solely on the datum (y) to be compared,

and the method further comprising steps for executing (2000) the calculation of the function between the datum (y) to be compared of the client unit (20) and the reference datum ($x_c$) indexed by the index c, during which:

- the client unit (20) sends (2100) the coordinates of the datum to be compared (y) to the secure component, which returns said datum in a masked form on the basis of the masking data that it holds,

- the client unit retrieves (2200), from the server unit, the reference datum indexed by the index c scrambled by the masking data, and
- on the basis of the data obtained from the secure electronic component and from the server unit, the client unit calculates (2300) the sum of the term of the function that depends solely on the reference datum and the polynomial term, and adds to said sum the term that depends solely on the datum to be compared such as to obtain the result of the function.

2. Method according to the preceding claim, wherein the function is a polynomial function of the coordinates of the datum (y) to be compared and of the reference datum ($x_c$) indexed by the index c.

3. Method according to one of claims 1 or 2, wherein the function is the square of the Euclidian distance between the datum to be compared (y) and the reference datum ($x_c$) indexed by c.

4. Method according to one of the preceding claims, wherein the masking data is generated randomly, by the secure electronic component (30) and/or the server unit (10), with the masking data integrated into the secure electronic component comprising a first set s and a second set r, and the masking data held by the server unit comprising the first set s, and a third set of which the elements are the inverses of the elements of the set r.

5. Method according to one of the preceding claims, wherein the step of retrieving (2200), by the client unit (20), of the reference datum indexed by c scrambled on the basis of the masking data is implemented by unaware transfer.

6. Method for initialising a secure component, during a method of processing according to one of the preceding claims, comprising:

   - the random generating of data r and s, such that the server unit (10) holds said data and the secure component (30) holds the set s, and a set of which the elements are the inverses of the elements of the set r, and
   - the integrating of said component into a processing unit that forms a client unit of the server unit.

7. Method of data processing implemented by a processing unit that holds an integer c and a datum (y), and comprising an integrated secure electronic component (30), for the execution of the method of processing according to one of claims 1 to 5 comprising the calculation of a function between the datum (y) and at least one reference datum ($x_c$) indexed by the index c and held by a server unit, during which the processing unit:

   - calculates (1400) the term of the function that depends only on the datum (y),
   - obtains (2200), via unaware transfer with a server unit, a reference datum held by the server unit and indexed by the integer c, and scrambled by masking data,
   - sends (2100) to the secure electronic component the coordinates of the datum (y) that it holds, and receives as a response said masked datum, and
   - calculates the sum of the term of the function that depends solely on the reference datum and on the polynomial term, on the basis of the data obtained from the secure electronic component and from the server unit, and adds to said sum the term that depends solely on the datum to be compared such as to obtain the result of the function.

8. Processing unit (20), comprising means of processing configured to implement the method according to the preceding claim.

9. Computer program product comprising code instructions for the implementation of the method according to claim 7 when the latter is implemented by means of processing of a processing unit.

10. Method of data processing implemented by a processing unit (10) holding N reference data ($X_1$, ..., $X_N$), for the executing of the method of processing according to one of claims 1 to 5, during which the processing unit:

   - generates masking data (1100) and inserts said data into the secure electronic component, or loads onto the component an initialisation key that allows for the generating by the secure component of pseudorandom numbers (1050), and
   - scrambles (1300) the reference data on the basis of masking data.

11. Processing unit (10), comprising means for processing configured to implement the method according to the preceding claim.

12. Computer program product comprising code instructions for the implementing of the method according to claim 10 when the latter is implemented by processing means of a processing unit.

13. Method of authenticating or of identifying an individual, comprising the comparing of a biometric datum (y) acquired on an individual with one or several biometric reference data $(X_1,..., X_N)$ acquired on listed individuals, in which each comparison between the datum of the individual and a reference datum is carried out by the implementing of the secure data processing method according to one of claims 1 to 5 between the datum of the individual and the reference datum.

14. System of authenticating or of identifying an individual, comprising a server unit (10) comprising a biometric reference database (DB) of listed individuals $(X_1, ..., X_N)$, and a client unit (20), said client unit comprising an integrated secure electronic component (30),
the system being **characterised in that** it is adapted to implement the method according to the preceding claim.

15. System for authenticating or of identifying according to the preceding claim, wherein the client unit is a personal electronic device of the individual to be identified or authenticated, and the secure electronic component (30) is a chip card.

**FIG.1**

**FIG.2**

**10**

DB
$(x_1,...,x_N)$

1100  $r=(r_1,...,r_m),$
$s=(s_1,...,s_m)$

1200  $(\frac{1}{r_1},...,\frac{1}{r_m})$

1000

1300
$\alpha_i$
$= \sum_{j=1}^{m}(-2)x_{i,j}r_j s_j - \sum_{i}^{m} x^2{}_{i,j}$

$\tilde{x}_i = (r_1 x_{i,1},...,r_m x_{i,m})$

2000

**20**

$y=(y_1,...,y_m),$
c

2100

**30**
$(\frac{1}{r_1},...,\frac{1}{r_m}), s$

1200

1400  $S_3 = \sum_{i=1}^{m} y^2{}_i$

2100   $(t_1,...,t_n)$

2200  $\tilde{x}_c, \alpha_c$

2300   $f(y, x_c)$

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.L. LAGENDIJK.** Encrypted Signal Processing for Privacy Protection: Conveying the Utility of Homomorphic Encryption and Multiparty Computation. *IEEE Signal Processing Magazine,* 2013, vol. 30 (1), 82-105

- **M. A. TURK ; A. P. PENTLAND.** Eigenfaces for Récognition. *Journal of Cognitive Neuroscience,* 1991, vol. 3 (1), 71-86
- **A. K. JAIN ; S. PRABHAKAR ; L. HONG ; S. PANKANTI.** Fingercode : A Filterbank for Fingerprint Representation and Matching. *CVPR,* 1999, 2187